# EUROPEAN PATENT SPECIFICATION

(11) **EP 2 328 843 B1**
(45) Date of publication and mention of the grant of the patent: **13.03.2013**
(21) Application number: 09787101.6
(22) Date of filing: 04.09.2009
(51) Int. Cl.: C01G 23/00, B01F 3/12, C01G 23/08, C01G 23/053, C01G 23/047, B82Y 30/00

(54) **METHOD FOR PREPARING AQUEOS SOLUTIONS OF SINGLE TITANIUM OXIDE NANOTUBES AND AQUEOS SOLUTIONS OF NANOTUBES OBTAINED WITH SUCH METHOD**
VERFAHREN ZUR HERSTELLUNG VON WÄSSRIGEN LÖSUNGEN VON EINZELNEN TITANOXIDNANORÖHREN UND DURCH DIESES VERFAHREN ERHALTENE WÄSSRIGE LÖSUNGEN VON NANORÖHREN
PROCÉDÉ DE PRÉPARATION DE SOLUTIONS AQUEUSES DE NANOTUBES D OXYDE DE TITANE UNIQUES ET SOLUTIONS AQUEUSES DE NANOTUBES OBTENUES PAR CE PROCÉDÉ

(30) Priority: 04.09.2008 IT PD20080258
(43) Date of publication of application: 08.06.2011
(73) Proprietor: Consorzio Interuniversitario "Istituto Nazionale Di Biostrutture e Biosistemi", 00136 Roma (IT); Rigo, Adelio, 30123 Venezia (IT); Magro, Massimiliano, 30030 Vigonovo, Venezia (IT); Vianello, Fabio, 30175 Marghera, Venezia (IT); Zennaro, Lucio, 30174 Mestre, Venezia (IT); Scarpa, Marina, 38050 Cognola, Trento (IT); Tognon, Giuseppe, 35124 Padova (IT)
(72) Inventor: RIGO, Adelio, 30123 Venezia (IT); MAGRO, Massimiliano, 30030 Vigonovo (VE) (IT); VIANELLO, Fabio, 30175 Marghera (VE) (IT); ZENNARO, Lucio, 30174 Mestre (VE) (IT); SCARPA, Marina, 38050 Cognola (TRENTO) (IT); TOGNON, Giuseppe, 35124 Padova (IT)
(74) Representative: Mitola, Marco
(86) International application number: PCT/IB2009/053866
(87) International publication number: WO 2010/026550

(56) References cited:
- US-A1- 2004 200 991
- DATABASE WPI Week 2009 Thomson Scientific, London, GB; AN 2009-B25499 XP002533829 SHENG WANG [CN]; TAO WANG [CN]; WEI WANG [CN]; WENXING CHEN [CN]: "Preparation of titanic oxide nano pipe light catalyst with hollow protection layer" & CN 101 249 429 A (UNIV ZHEJIANG SCIENCE & TECH [CN]) 27 August 2008 (2008-08-27)

## Description

Field of application

The present invention relates to a method for preparing aqueous solutions of titanium oxide nanotubes, as well as aqueous solutions of nanotubes obtained with such method.

State of the art

As is known, titanium dioxide (TiO₂) is an extremely versatile material present in nature in great quantities in its two crystalline forms, anatase and rutile. Titanium dioxide may be subject to modifications which lead to variations in the oxygen/titanium ratio.

Among the characteristics making titanium dioxide and titanium oxides in general interesting, are, specifically, their non-toxicity (TiO₂ is in fact used as an excipient in a wide range of medications), biocompatibility (titanium, a metal widely used in implantology, is coated by a surface layer of dioxide), elevated chemical stability, redox properties, resistance to UV radiation and the fact that they are semiconductors.

These characteristics make titanium oxides applicable to a number of sectors.

In recent years titanium oxide nanotubes have been made by heating titanium oxide in concentrated solutions of alkaline hydrates, such as for example sodium hydrate, at temperatures between 50 and 250 °C. The material thus obtained appears as an assembly of crystalline aggregates composed of titanium oxide nanotubes practically insoluble in water. In aqueous solution the maximum concentrations of TiO₂, obtained after filtration using filters with porosity such as to exclude any particles larger than 200 nm, are around 0.1 mg/l.

In its solid state, or as a suspension of aggregates in water, titanium oxide nanotubes are used, as an alternative to crystalline titanium oxide, in processes requiring a large active surface, such as for example in catalytic, photo-catalytic and electrodic processes.

The properties associated with the nanometric structure of titanium oxide nanotubes together with the properties of titanium oxides already mentioned make the use of such nanotubes potentially advantageous in numerous applications, especially in the biomedical field, as carriers of active or pharmacological substances.

Up to today, the limited solubility in water of the titanium oxide nanotubes or the facility with which they form aggregates has however excluded or strongly limited their use in all those applications requiring, or at least preferring, the presence of single nanotubes in aqueous solutions. For example, for biomedical applications it is convenient if the carrier compounds of active and pharmacological substances have a solubility in water of about 10 mg/l, while for photo-catalytic applications it may be convenient to work with aqueous solutions containing nanotubes present in single units.
US/2009/0200991 reports the formation of a solution of TiO₂ nanotubes in an anhydrous solvent.

Presentation of the invention

Consequently, the purpose of the present invention is to eliminate the drawbacks of the known technique described above, making available a method for preparing aqueous solutions of single titanium oxide nanotubes, which makes it possible to obtain solutions of titanium oxide nanotubes, stable over time, with concentrations of not less than 10 mg/l in terms of titanium dioxide.

A further purpose of the present invention is that of making available a method for preparing aqueous solutions of titanium oxide nanotubes making it possible to obtain aqueous solutions of single titanium oxide nanotubes stable over wide pH ranges.

A further purpose of the present invention is to make available a method for preparing aqueous solutions of single titanium oxide nanotubes making it possible to obtain aqueous solutions of single titanium oxide nanotubes which remain stable even if subjected to centrifugal fields of up to about 3 10⁴ x g for periods of time of about ten minutes.

A further purpose of the present invention is to make available a method for preparing aqueous solutions of titanium oxide nanotubes which is operatively simple and economically convenient.

Brief description of the drawings

The technical characteristics of the invention, according to the aforesaid purposes, can be clearly seen from the contents of the claims below and the advantages of the same will be even more evident from the detailed description which follows, with reference to the attached drawings which show one or more embodiments purely by way of example and not limited to such, wherein:

**-** Figures 1 to 4 each show a schematic diagram respectively of four different forms of application of the method according to the invention;

**-** Figure 5 shows the absorbance trend of the titanium oxide nanotubes in solution as sonication proceeds, in three suspensions of titanium oxide nanotubes, with different pH conditions, treated according to the method of the invention;

**-** Figure 6 shows the abosrbance trend of the titanium oxide nanotubes in solution as sonication proceeds, in two suspensions of nanotubes, with different pH conditions and saline concentration, treated according to a particular form of application of the method of the invention;

**-** Figure 7 shows the UV-Vis spectrum of an aqueous solution of titanium oxide nanotubes obtained according to the method of the invention; and

**-** Figure 8 shows an image acquired using an atomic microscope of an aqueous solution of titanium oxide nanotubes obtained according to the method of the invention.

Detailed description

The present invention relates to a method for the preparation of aqueous solutions of single titanium oxide nanotubes, as well as aqueous solutions of titanium oxide nanotubes obtained with such method.

Here and hereafter in the description the expression "oxides or oxide salts" is taken to mean compounds of tetravalent titanium, such as for example titanium dioxide (TiO₂).

The expression "titanium oxide nanotubes" is taken to refer to substantially tubular structures of nanometric dimensions, having a general formula HₓM_{y}Ti₃O_{z}, where H indicates a hydrogen atom, M an atom of a metal chosen from the group comprising sodium, potassium and/or lithium, Ti a titanium atom and O an oxygen atom, and X + Y may be between 0 and 2, while Z may be between 5 and 7. The type of metal M depends on the composition of the reagent used to produce the nanotubes or on the exchange process to which the ready formed nanotubes were subjected, if any.

According to a general form of application of the invention, the method for preparing aqueous solutions of single titanium oxide nanotubes, comprises the following essential steps:

- preparing a pre-set quantity of titanium oxide nanotubes;

**-** subjecting said pre-set quantity of titanium oxide nanotubes to rinsing with water once or more until the rinsing water, in chemical equilibrium with the nanotubes present in said water as a solid phase, has a pH between 4 and 10 and specific conductivity of not more than 200 µS/cm;

**-** subjecting said solid phase to sonication in water obtaining an aqueous suspension in which at least a part of said nanotubes are present in solution as single units; and

**-** subjecting said sonicated aqueous suspension to centrifugation obtaining an aqueous solution of single titanium oxide nanotubes with a concentration in terms of titanium dioxide of not less than 10 mg/l.

The term "sonication" is taken to mean the technique normally used to apply ultrasound waves to liquids in a controlled manner so as to cause the so-called phenomenon of cavitation or the formation of bubbles. The technique itself is known and does not therefore require a specific description.

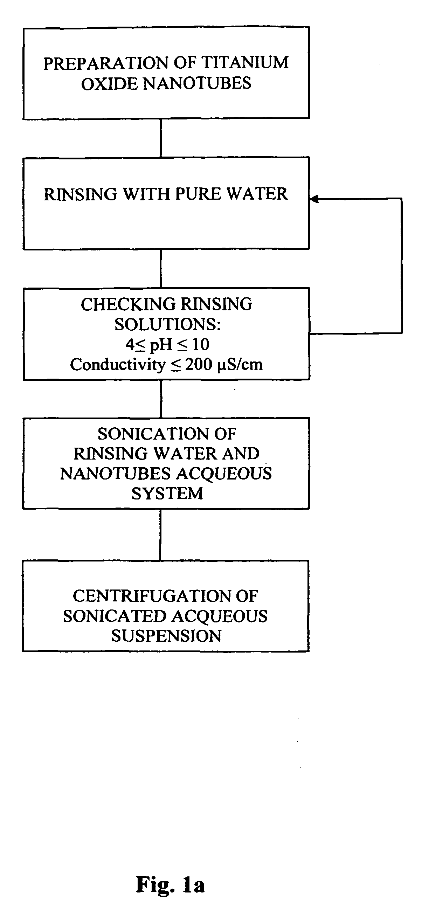

According to a particular embodiment, shown in the diagram of figure 1a, the sonication step is performed directly on the aqueous system composed of the nanotubes in a solid phase and of the rinsing water in chemical equilibrium with the nanotubes having a pH between 4 and 10 and specific conductivity of not more than 200 µS/cm.

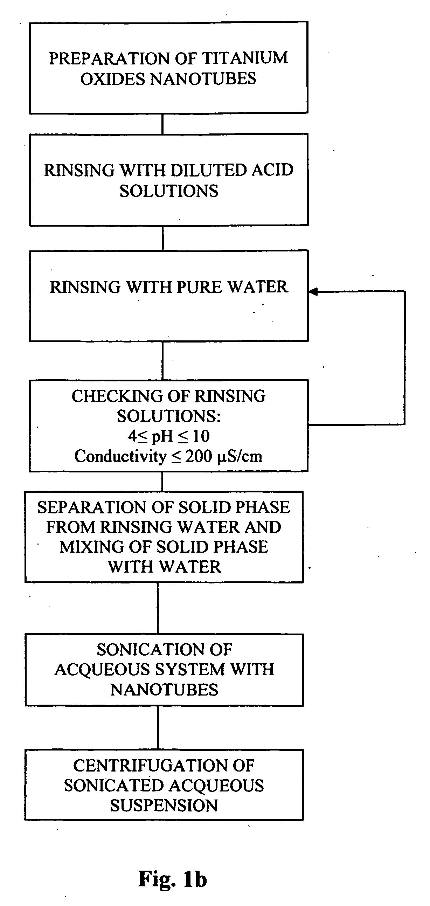

According to a particular embodiment, shown in the diagram of figure 1b, at the end of the rinsing step, the solid phase composed of the nanotubes is separated, preferably by decantation and/or centrifugation, from the rinsing water in chemical equilibrium with the nanotubes having the aforesaid properties of pH and specific conductivity. Water, preferably pure, is added to the solid phase obtaining an aqueous system. Preferably, water is added until the mass ratio of water to titanium dioxide is over 10⁵. The sonication step is then performed on the aforesaid aqueous system.

Surprisingly, it was seen that once the pH and specific conductivity conditions specified above were reached in the aqueous system formed of rinsing water in chemical equilibrium with the titanium oxide nanotubes, subjecting the solid phase composed of nanotubes to sonication in water (directly in the last rinsing water or in an aqueous system obtained by mixing the solid phase separate from the rinsing water with other water), already after a period of time to the order of several minutes solutions of single nanotubes are obtained (after centrifugation) having concentrations in terms of titanium dioxide (TiO₂) of 2 orders of magnitude greater than those achievable up to today, in other words solutions with concentrations of not less than 10 mg/l are obtained.

Advantageously, prolonging the sonication time properly, (with periods of treatment to the order of tens of hours), it is even possible to obtain solutions (after centrifugation) with concentrations of single titanium oxide nanotubes up to the order of 10 g/l.

The solutions of titanium oxide nanotubes obtained with the method according to the present invention are stable over time. In fact it was verified that even after periods of longer than 1 month there was no separation of the nanotubes by decantation or precipitation.

The aqueous solutions do not sediment even if subjected to centrifugal fields of 3 10⁴ x g for periods of time up to 30 minutes.

The aqueous solutions are also stable over a wide range of pH values, between 4 and 11. The solutions are therefore stable for physiological pH values, to the benefit of possible use of the same in biomedical applications.

As will be clarified below, the titanium oxide nanotubes present may, in addition, be modified both in the lattice and on their surface with various elements so as to vary the electronic properties and the possibilities of interaction with the environment. This further widens the scope of possible applications of the solutions according to the invention.

According to a preferred form of application of the invention, the titanium oxide nanotubes are obtained by heating under agitation titanium dioxide (TiO₂) in its various crystalline forms to temperatures ranging from about 50°C to about 250°C in a highly alkaline environment for a period of not less than 1 hour.

More specifically, the alkaline environment is created by heating titanium oxides and/or titanium salts in concentrated solutions of one or more alkaline hydrates. Preferably the hydrates are chosen from the group comprising sodium hydrate, potassium hydrate or lithium hydrate.

At the end of the treatment a semi-solid, sticky mass, insoluble in water, is obtained composed of aggregates of titanium oxide nanotubes and the excess of alkaline hydrates.

Advantageously, other production processes may be used, starting for example from titanium compounds, for example titanium tetrachloride (TiCl₄).

As mentioned above, the semisolid mass of titanium oxide nanotubes produced is subjected to one or more repeated rinses with water until the rinsing water, meant as the water in chemical equilibrium with the mass of nanotubes, has a pH between 4 and 10 and specific conductivity of not more than 200 µS/cm.

After rinsing, the initial semisolid, sticky mass acquires the consistency of a sandy material which tend easily to sediment in water.

According to a preferred applicative solution, rinses of the quantity of nanotubes are performed with purified water.

Preferably, as shown for example in the diagram in Figure 1a, pure water is used for such rinses, that is water subjected to suitable purification so that it has a specific conductivity at 25°C of less than 1 µS/cm.

The number of rinses depends on the properties of the mass of nanotubes produced and on the type of aqueous solution used for the rinses.

According to alternative applicative solutions such as indicated for example in Figure 1b, given the highly alkaline nature of the nanotubes produced, at least some of the rinses (preferably the first few) may be advantageously performed with slightly acid aqueous solutions, for example with diluted solutions of hydrochloric acid.

As already mentioned, once the aqueous system produced by the rinsing water and the nanotubes in chemical equilibrium has a pH between 4 and 10 and specific conductivity of not more than 200 µS/cm, the solid phase composed of nanotubes is sonicated in water so as to at least partially solubilise the mass of nanotubes present.

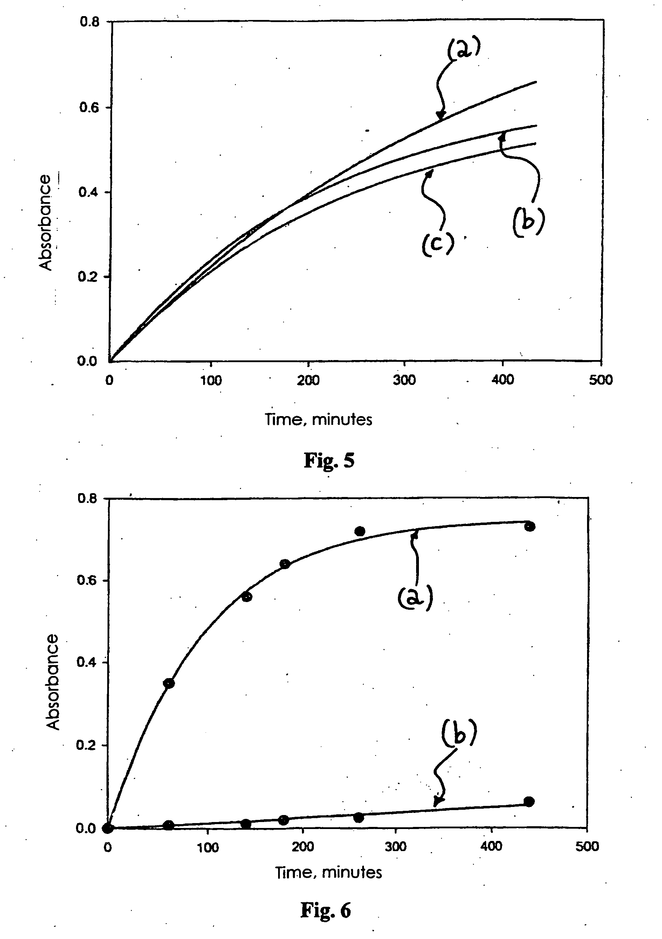

Preferably, sonication is performed for at least 5 minutes with a power of not less than 10 watt and a frequency of not less than 30 kHz. Operating at these parameters, already after a period of time to the order of several minutes, (after centrifugation) solutions with concentrations to the order of 10 mg/l in terms of titanium dioxide are found, as may deducted from the absorbance graphs over time shown in Figures 5 and 6 (which will be commented on henceforth).

Advantageously, the operating parameters may be modified, increasing, specifically, the power and/or frequency of the sound waves, so as to increase - over the same period of treatment - the concentration of the solutions, or so as to decrease - for the same concentrations - the treatment times.

To assess the progress of the solubilisation process absorbance measurements of the solutions during sonication treatment were taken over time. The high concentrations of the solutions achieved from the start of treatment make absorbance measurement impossible. The samples taken from the aqueous system containing the mass of partially solubilised nanotubes were therefore centrifuged, filtered using filters having a porosity such as to exclude particles of over 100 nm and diluted in pure water at a dilution ratio of 400.

Figure 5 shows the trend of absorbance values (A) measured over time for different aqueous solutions of titanium oxide nanotubes obtained with the method according to the invention.

More in detail, the curve (a) refers to a solution of nanotubes obtained from an aqueous system having a starting pH of 4.8, curve (b) to a solution obtained from an aqueous system with starting pH of 6.9, and curve (c) to a solution obtained from an aqueous system with starting pH of 5.9. In all three cases the concentration of the nanotubes passing into the solution (directly proportional to absorbance) increases over time according to the equation Cₜ = Cₒ (1-e3^{-k t}), where Cₜ represents the concentration of the nanotubes in solution at time t, where Cₒ represents the concentration of the nanotubes in solution in an infinite time and k is a kinetic constant, generally having a value between 0.1 and 0.3 hour⁻¹.

The aqueous systems from which the three solutions derive, of which the absorbance trends are shown, were all subjected to the same sonication treatment, that is at a power of 50 Watt and wave frequency of 47 kHz.

Applying the Lambert-Beer law (A = C c d, where C is the concentration of the titanium oxide nanotubes in the solution, expressed as mol/L, ε is the molar extinction coefficient of the nanotubes, expressed in L mol⁻¹ cm⁻¹ and d is the optic path in cm), considering a molar extinction coefficient of 10⁴ L mol⁻¹ cm⁻¹ and bearing in mind the dilution of the samples (necessary for measurement of the absorbance), for the three sonicated suspensions with partially solubilised nanotubes, after centrifugation and filtering, the following concentrations expressed in mg/l in terms of titanium dioxide have been measured:

**-** curve (a) : at 10 minutes 90 mg/l; at 100 minutes 700 mg/l; at 400 minutes 2000 mg/l;

**-** curve (b): at 10 minutes 90 mg/l; at 100 minutes 750 mg/l; at 400 minutes 1700 mg/l;

**-** curve (c): at 10 minutes 85 mg/l; at 100 minutes 650 mg/l; at 400 minutes 1580 mg/l.

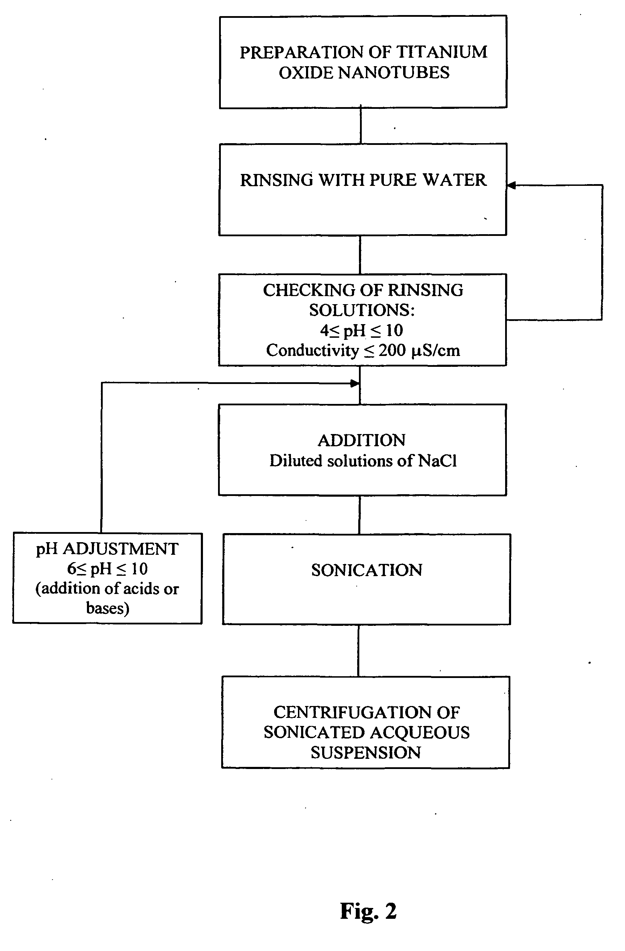

According to a preferred form of application of the method according to the present invention, shown in the diagram in Figure 2, before sonication diluted aqueous solutions of salts of metals from the group comprising sodium, potassium and/or lithium, are added to the aqueous system. As will be explained below the addition of such solutions is only made should the aqueous system of nanotubes have a pH over 6.

Advantageously, to such purpose, as indicated specifically in Figure 2, depending on the pH of the aqueous system to be sonicated, an adjustment step of the pH of the aqueous suspension may be foreseen up to values of not less than 6 and not more than 10, by the addition of minimum quantities of acids or bases (for example HCl or NaOH).

Preferably, diluted solutions of sodium chloride and/or potassium chloride are used as salt solutions.

More specifically the salt solutions are added to the aqueous system in quantities such that the final concentration of the salts in the aqueous system is in the order of 1 mmol/l (millimole per litre).

According to a particularly preferred embodiment, which foresees production of the nanotubes by heating titanium oxide in the presence of concentrated solutions of NaOH, a diluted aqueous solution of NaCl is added to the aqueous suspensions of the nanotubes obtained at the end of the rinsing step so as to achieve a concentration of 1 mmol/l of NaCl in the suspension.

Surprisingly it was found that for pH values of not less than 6 the addition of such salt solutions considerably facilitates the solubilisation process of the nanotubes. Contrarily, it was found that the addition of such saline solutions to aqueous systems with a pH lower than 6 inhibits or certainly slows down the solubilisation process.

Figure 6 shows the trend of absorbance values (A) measured over time for two aqueous systems of titanium oxide nanotubes treated with the method according to the invention, to which aqueous solutions of NaCl were added so to reach concentrations of 1 mmol/l of NaCl in the aqueous system. Curve (a) refers to a solution of nanotubes obtained from an aqueous system having a starting pH of 6.4, while curve (b) refers to a solution obtained from an aqueous system with starting pH of 4.8.

By comparing the graphs in Figures 5 and 6 one may observe how the addition of NaCl considerably accelerates the solubilisation process for aqueous systems with a pH over 6, while it considerably inhibits the process for aqueous systems of nanotubes with pH lower than 6.

Using the method according to the invention, at the end of the sonication process, it was found that on average, albeit after varying periods of treatment (depending on the properties of the initial aqueous systems and the operating parameters of sonication), approximately 80% of the quantity in weight of the rinsed titanium oxide nanotubes were solubilised in the form of single nanotubes.

According to a preferred embodiment of the invention, after the sonication and centrifugation steps, a further step of filtration of the aqueous solution of nanotubes is foreseen, so as to eliminate from the solution the residues of nanotubes which have not passed into the solution, present in the form of macro aggregates.

More specifically, the filtration is performed using filters with a porosity of 100 nm.

Advantageously, the mass of nanotubes not solubilised, separated by centrifugation from the suspension obtained at the end of the sonication step may, in turn, be newly subjected to the steps of the method according to the invention.

From observations made with a transmission electron microscope and with an atomic force microscope, it was possible to verify that at the end of the centrifugation step aqueous solutions containing single nanotubes, open at the extremities, are obtained, characterised by a multilayer structure and varying length, from several tens to a hundred nanometres, an external diameter to the order of around ten nanometres and internal diameter of several nanometres.

In the case in which the nanotubes have been prepared by subjecting titanium dioxide to prolonged heating in concentrated solutions of sodium hydrate, after lyophilization of the solutions of nanotubes obtained with the method according to the invention, the nanotubes have a composition referable to the general formula NaₓTi_{y}O_{z}, with x = 2 ± 0.5, y = 3 ± 0.4, z = 7 ± 1.4.

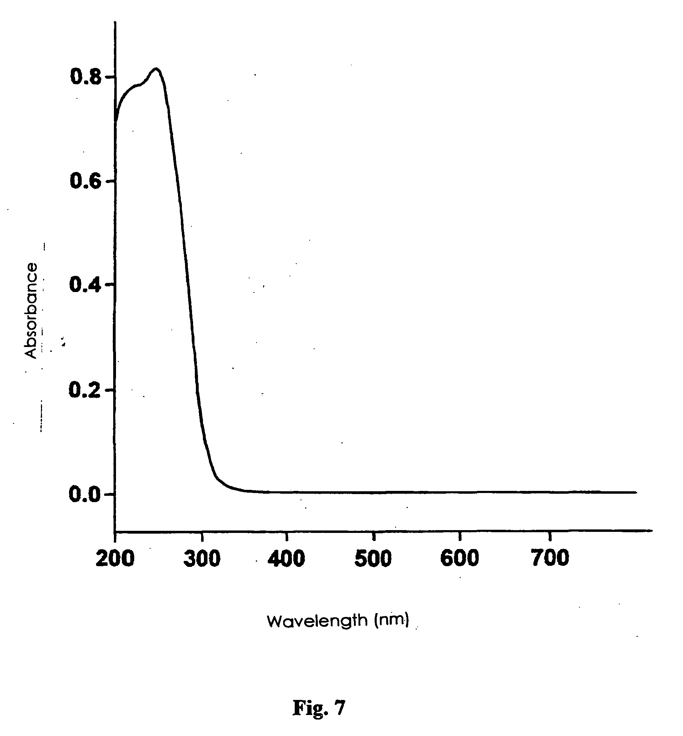

On the basis of spectro-photometric measurements, the aqueous solutions of titanium oxide nanotubes obtained according to the invention are seen to have a UV-Vis spectrum characterised by a double peak with a primary maximum and a secondary maximum respectively around 245 and 217 nanometres and by an ratio between absorbances at 245 and at 300 nanometres equal to or greater than 5.5. The spectrum measured for a solution of nanotubes obtained according to the invention is shown in Figure 7.

The ratio of the absorbances measured in the UV-vis spectrum, together with the absence of scattering, indicates that no aggregates of nanotubes are present in the solutions obtained.

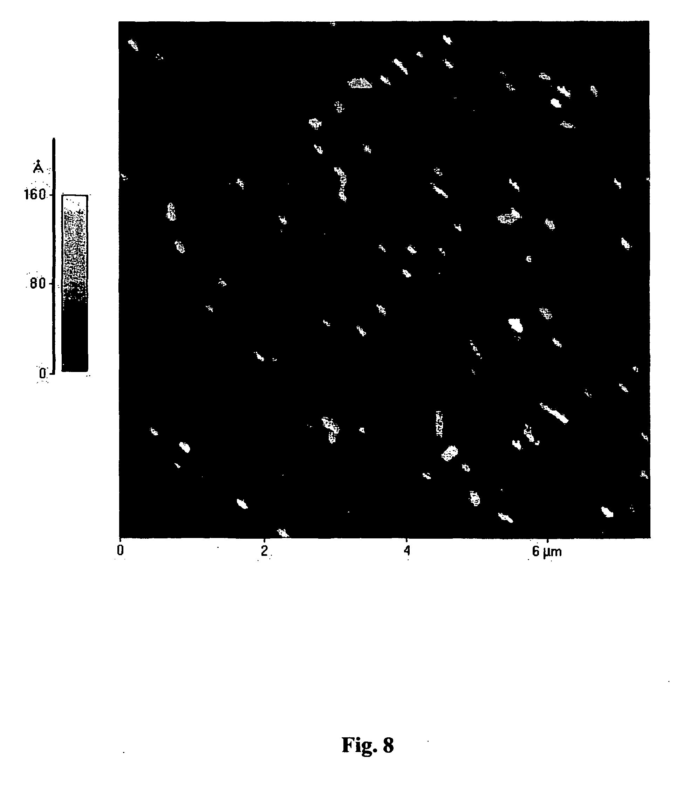

The absence of aggregates of nanotubes in the solutions was confirmed by observations made using an atomic force microscope. Figure 8 shows an image, acquired using an atomic force microscope, of an aqueous solution of nanotubes obtained according to the method of the invention, (the y-axis shown in the image indicates the height, expressed in Angstrom Å = 10⁻¹⁰ m, of the "objects" shown by the microscope in relation to a reference plane). The image clearly shows how the nanotubes (shown as brighter, oval, white-greyish marks) are present as single units.

As already mentioned earlier, the titanium oxide nanotubes present in the solutions obtained according to the invention may, moreover, be modified both in the lattice and on their surface with various ions of elements, so as to alter their electronic characteristics and possibilities of interaction with the environment.

According to a first particular form of application of the method according to the invention (not shown in the attached figures), during the preparation step of the nanotubes, oxides or salts of metals chosen from the group comprising scandium (Sc), yttrium (Y), vanadium (V) or niobium (Nb) are mixed with the titanium oxides and/or titanium salts, before proceeding with the synthesis of the nanotubes by heating with alkaline hydrates. In this way ions of the metals above specified are inserted in the crystalline lattice and/or onto the surface of the nanotubes to be formed.

Advantageously, it has been found that the aqueous solutions of titanium oxide nanotubes have titration curves with typical pKa. This makes the reversible exchange of metal ions present in the crystalline lattice of the nanotubes possible.

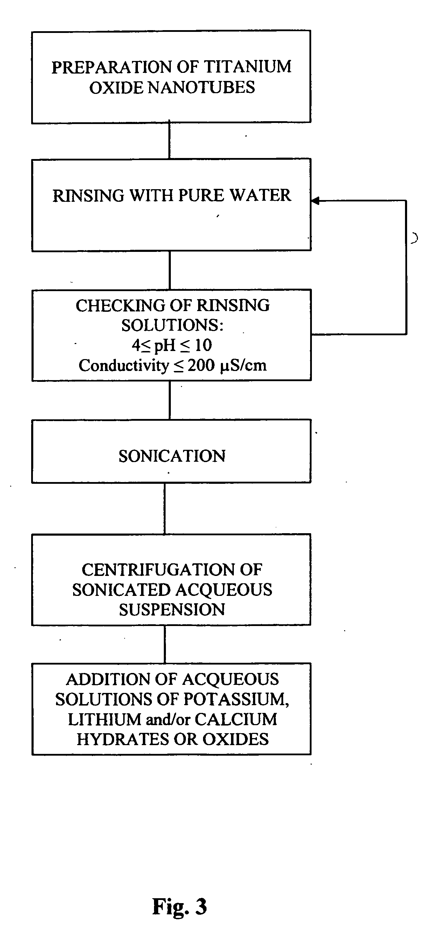

According to a second particular form of application of the method according to the invention, illustrated in Figure 3, a step of treating the aqueous solution of nanotubes with solutions of hydrates and oxides of the metals chosen from the group comprising lithium (Li), sodium (Na), potassium (K) and calcium (Ca), is foreseen for the purpose of generating an ionic exchange with at least part of the metal ions (mainly sodium) already present in the crystalline lattice of said nanotubes.

Alternatively, the aqueous solution of nanotubes can be treated with acids so as to substitute with H⁺ ions at least part of the metal ions already present in the crystalline lattice of the nanotubes (for example Na⁺, if the nanotubes have been produced by heating TiO₂ in the presence of NaOH).

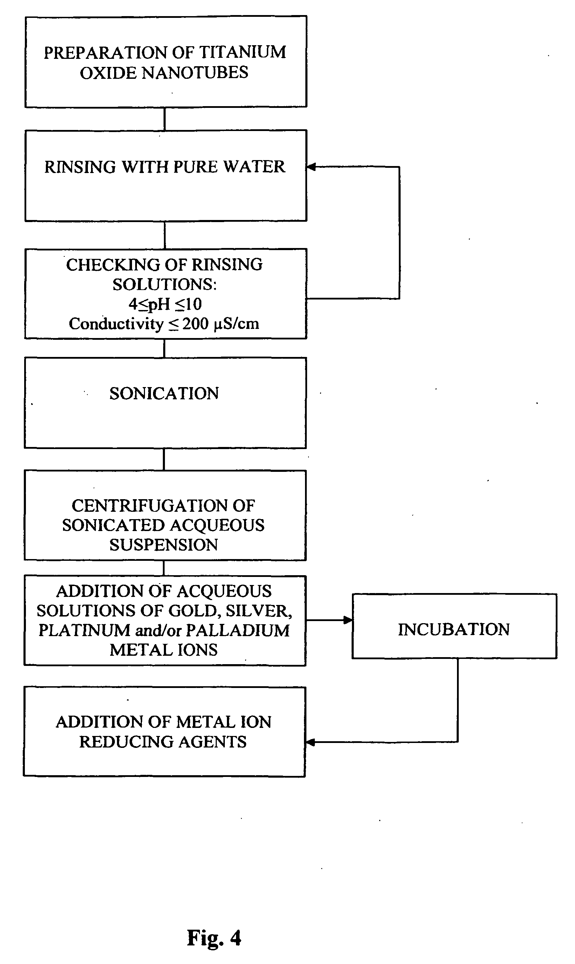

According to a third particular form of application of the method according to the invention, illustrated in Figure 4, a step of laying nano-particles of metals chosen from the group comprising palladium (Pd), platinum (Pt), silver (Ag), gold (Au) and/or ruthenium (Ru) on the nanotubes of the aqueous solutions obtained according to the invention is foreseen.

More specifically, the laying step foresees:

**-** mixing the solution of nanotubes with aqueous solutions containing ions of the metals chosen from the group comprising palladium, platinum, silver, gold and/or ruthenium; and

**-** adding to the mixture reducing agents able to reduce the ions to the metallic state.

Sodium citrate or sodium borohydride, for example, may be used as reducing agents.

Preferably, before adding the reducing agents, a period of incubation of at least 2 hours is foreseen so as to allow the nanotubes in solution to absorb the metal ions.

The nano-particles of heavy metals deposited on the nanotubes help to modify the electronic characteristics of the nanotubes and the possibility of electron transfer. This may find interesting applications in the electronic sector.

Below several specific examples of application of the method according to the invention are given.

Example 1

0.2 grams of anatase were heated to 130 °C for 24 hours with 20 ml of an aqueous solution of sodium hydrate containing 5 mol/l of NaOH obtaining a mass of titanium oxide nanotubes insoluble in water. The mass is semisolid and has a sticky consistency.

The insoluble mass of nanotubes was repeatedly rinsed with pure water until the rinsing solutions were characterised by a specific conductivity of about 30 µS/cm (microSiemens/cm) and pH of 8, obtaining a mass of nanotubes still insoluble in water, but of a sandy consistency.

50 ml of water were added to the sandy, insoluble mass thus produced. The resulting mixture was subjected to sonication using a sonicator of Ultrasonik Cleaner Model 28X type with a power of 50 W and wave frequency of 47 kHz for 6 hours.

At the end of sonication a murky solution was obtained, which was centrifuged with fields of about 10⁴xg for a period of time of about 20 minutes. The clear solution obtained by centrifugation was then filtered through a filter having a porosity of 100 nm.

Using spectro-photometric measurements, the aqueous solution was seen to have a typical spectrum with an ratio between absorbances at 245 and at 300 nanometres equal to 6. The final aqueous solution, containing about 80% of the mass of titanium dioxide initially placed to heat in NaOH in the form of solubilised nanotubes, has a concentration of about 3,2 g/l in terms of titanium dioxide. The solution remains stable even when the pH value is modified within the range 4-11 by the addition of acids such as hydrochloric acid or bases such as sodium hydrate.

Example 2

The insoluble, sandy mass of nanotubes as in example 1 was produced. 20 ml of water was added to the sandy, insoluble mass produced by heating. The resulting mixture was subjected to sonication as in example 1 but for a period of about 12 hours. The clear solution obtained after centrifugation and filtration has a concentration of 8 g/l in terms of titanium dioxide.

Example 3

The insoluble, sandy mass of nanotubes as in example 1 was produced. 50 ml of 0.1 millimolar NaOH containing 1 millimolar NaCl was added to the sandy, insoluble mass thus produced. The pH of the aqueous suspension thus obtained was 6.4.

The resulting mixture was sonicated as in example 1 for a period of time of 10 minutes. The murky solution obtained was then centrifuged and filtered as in example 1, obtaining a clear solution characterised by a typical spectrum with a ratio between absorbances at 245 and at 300 nanometres equal to 6. The clear solution has a concentration of 0.2 g/l in terms of titanium dioxide.

Example 4

25 mg of V₂O₅ was added to 200 mg of titanium oxide. After heating at 130 °C for 24 hours with an aqueous solution of sodium hydrate containing 5 mol/l of NaOH a mass of nanotubes insoluble in water was obtained which was repeatedly rinsed with ultrapure water until the rinsing solutions had a specific conductivity of less than 40 microSiemens/cm and pH 7.5. 50 ml of water was added to the sandy mass thus obtained and treated as in example 1.

The final aqueous solution, containing about 80% of the mass of titanium oxides and vanadium placed to heat in NaOH, in the form of solubilised nanotubes, has a concentration of about 3.2 g/l in terms of titanium dioxide. The nanotubes present in the solution thus obtained are characterised by the presence of about one atom of V for every 100 atoms of Ti.

Example 5

A concentrated solution of lithium chloride brought to a pH value of 10-12 by adding lithium hydrate was added under agitation to an aqueous solution of titanium oxide nanotubes obtained as in example 1, having a concentration of 5 g/l of titanium dioxide. In this way about 20% of the sodium ions present in the nanotubes were replaced with lithium ions obtaining a solution of nanotubes stable over time.

Example 6

A concentrated aqueous solution of cloroauric acid (HAuCl₄) was added to a solution of nanotubes having a concentration of 0.3 g/l of titanium dioxide until a final concentration of 0.060 g/l in terms of cloroauric acid was reached. After a period of rest of about 8 hours the trivalent gold present was reduced to a state of zero valence by addition of an excess of sodium borohydride dissolved in water up to a final concentration of 20 mmol/l. The aqueous solution thus obtained, stable and coloured red, is characterised by the presence of single titanium oxide nanotubes having inside them and on their surface metal particles of gold of a size in the order of a nanometre.

Thanks to the method according to the invention, solutions of single titanium oxide nanotubes having concentrations in terms of titanium dioxide varying from the order of 10 mg/l to the order of 10 g/l can be obtained.

The solutions obtained are stable over time, no separation of the nanotubes by decantation or by precipitation being observed after periods of over one month.

The aqueous solutions are also stable over a wide pH range, which includes physiological values.

The solutions do not sediment even if subjected to centrifugal fields of up to 3 10⁴xg for periods of time of up to about 30 minutes.

The method according to the invention makes it possible to obtain such stable aqueous solutions with relatively short treatment times (from a few minutes to about ten hours, excluding the preparation step of the nanotubes).

The sonication treatment may be conducted using devices available on the market, given that the operating conditions of the treatment are substantially standard.

This is to the advantage of the simplicity and economy of the method according to the invention.

Lastly, the method according to the invention makes it possible to easily modify the composition of the nanotubes. To such purpose one may intervene directly in the preparation step of the nanotubes themselves, or indeed on the nanotubes in solution.

The invention thus conceived consequently achieves the intended purposes.

Obviously, in its practical embodiment it may assume forms and configurations different from those illustrated above while remaining within the present scope of protection.

## Claims

1. Method for preparing aqueous solutions of single titanium oxide nanotubes, comprising the following steps:
- preparing a pre-set quantity of titanium oxide nanotubes;
- subjecting said pre-set quantity of titanium oxide nanotubes to one or more rinses with water, until the rinsing water, in chemical equilibrium with said nanotubes present in said water as a solid phase, has a pH between 4 and 10 and specific conductivity of not more than 200 *µ*S/cm;
- subjecting said solid phase to sonication in water obtaining an aqueous suspension in which at least a part of said nanotubes are present in solution as single units; and
- subjecting said sonicated aqueous suspension to centrifugation obtaining an aqueous solution of single titanium oxide nanotubes with a concentration in terms of titanium dioxide of not less than 10 mg/l.

2. Method according to claim 1, wherein said sonication step is performed on the aqueous system composed of said rinsing water and said nanotubes.

3. Method according to claim 1, wherein said sonication step is performed on the aqueous system composed of said solid phase separated from said rinsing water and mixed with water added until a ratio in mass between water and titanium dioxide of not more than 10⁵ is obtained.

4. Method according to one or more of the previous claims, wherein said rinses are performed using pure water.

5. Method according to one or more of claims 1 to 3, wherein at least some of said rinses are performed using acid aqueous solutions.

6. Method according to one or more of the previous claims, wherein said sonication step is performed for at least 2 minutes with a power of not less than 10 watt and a frequency of not less than 30 kHz.

7. Method according to one or more of the previous claims, wherein said centrifugation step is performed with accelerations ranging from 10³g to 310⁴g for maximum periods of time of about 30 minutes.

8. Method according to one or more of the previous claims, comprising a filtration step of said aqueous solution of titanium oxides aimed at eliminating the residues of nanotubes which have not passed in solution, said filtration step being preferably performed with filters having porosity of approximately 100 nmn.

9. Method according to any of the previous claims, wherein said step of preparing said quantity of titanium oxide nanotubes is achieved by heating titanium oxides and/or titanium salts to temperatures ranging from about 50°C to about 250°C in a highly alkaline environment for a period of not less than 2 hours.

10. Method according to the previous claim, wherein said titanium oxides and/or titanium salts are subjected to heating together with one or more alkaline hydrates, preferably chosen from the group comprising sodium hydrate, potassium hydrate or lithium hydrate.

11. Method according to any of the previous claims, wherein before said sonication step, diluted aqueous solutions of salts of metals chosen from the group comprising sodium, potassium and/or lithium, preferably sodium chloride, are added to said aqueous system containing said nanotubes, having a pH of not less than 6, so as to promote the dissolution of said nanotubes in water.

12. Method according to any of the previous claims, wherein in said preparation step, oxides or salts of metals chosen from the group comprising scandium, yttrium, vanadium and/or niobium are mixed with said titanium oxides or titanium salts so as to insert the ions of said metals into the crystalline lattice of said nanotubes.

13. Method according to any of the previous claims, comprising a step of treating said aqueous solution of single nanotubes with solutions of hydrates and oxides of the metals chosen from the group comprising lithium, sodium, potassium and/or calcium, so as to generate an ionic exchange with at least some of the metal ions already present in the crystalline lattice of said nanotubes.

14. Method according to any of the previous claims, comprising a step of laying nano-particles of metals chosen from the group comprising palladium, platinum, silver, gold and/or ruthenium on the nanotubes of said aqueous solution, said step comprising:
- mixing said solution of nanotubes with aqueous solutions containing ions of said metals; and
- adding to said mixture reducing agents able to reduce said ions to the metal state.

15. Method according to the previous claim, wherein before adding said reducing agents a period of incubation of at least 2 hours is foreseen so as to allow said nanotubes in solution to absorb said ions.

16. Aqueous solution of single titanium oxide nanotubes, **characterised by** the fact of having a concentration calculated as titanium dioxide of not less than 10 mg/l, of being stable when subjected to centrifugal fields of up to 310⁴g for periods of time of up to 30 minutes and of being stable over time in a pH range of 4 to 11.

17. Aqueous solution according to the previous claim, wherein said aqueous solution has a UV-Vis spectrum which in the 200-300 nm range shows a double peak with a primary maximum and secondary maximum respectively around 245 and 217 nanometres and a ratio between the absorbance at 245 and 300 nanometres equal to or greater than 5.5.

## Patentansprüche

1. Verfahren zur Herstellung von wässrigen Lösungen von Sin-gle-Titanoxidnanotubes, umfassend die folgenden Schritte:
- Herstellen einer voreingestellten Quantität von Titanoxidnanotubes,
- Unterwerfen der voreingestellten Quantität von Titanoxidnanotubes einer oder mehreren Spülungen mit Wasser, bis das Spülwasser im chemischen Gleichgewicht mit den in dem Wasser als einer Festphase vorliegenden Nanotubes einen pH von zwischen 4 und 10 und eine spezifische Leitfähigkeit von nicht mehr als 200 µS/cm aufweist,
- Unterwerfen der Festphase einer Beschallung in Wasser, wodurch eine wässrige Suspension erhalten wird, in welcher mindestens ein Teil der Nanotubes in Lösung als einzelne Einheiten vorliegen, und
- Unterwerfen der beschallten wässrigen Suspension einer Zentrifugierung, wodurch eine wässrige Lösung von Single-Titanoxidnanotubes mit einer Konzentration bezüglich Titandioxid von nicht weniger als 10 mg/l erhalten wird.

2. Verfahren gemäß Anspruch 1, wobei der Beschallungsschritt an dem wässrigen System, umfassend das Spülwasser und die Nanotubes, durchgeführt wird.

3. Verfahren gemäß Anspruch 1, wobei der Beschallungsschritt an dem wässrigen System, umfassend die Festphase, separiert von dem Spülwasser und gemischt mit zugegebenem Wasser, bis ein Verhältnis bezogen auf die Masse zwischen Wasser und Titanoxid von nicht mehr als 10⁵ erhalten wird, durchgeführt wird.

4. Verfahren gemäß einem der vorhergehenden Ansprüche, wobei die Spülungen unter Verwendung von reinem Wasser durchgeführt werden.

5. Verfahren gemäß einem der Ansprüche 1 bis 3, wobei mindestens einige der Spülungen unter Verwendung von sauren wässrigen Lösungen durchgeführt werden.

6. Verfahren gemäß einem oder mehreren der vorhergehenden Ansprüche, wobei der Beschallungsschritt für mindestens 2 Minuten mit einer Energie von nicht weniger als 10 Watt und einer Frequenz von nicht weniger als 30 kHz durchgeführt wird.

7. Verfahren gemäß einem oder mehreren der vorhergehenden Ansprüche, wobei der Zentrifugierungsschritt mit Beschleunigungen im Bereich von 10³ g bis 3 10⁴ g für Maximalzeitdauern von etwa 30 Minuten durchgeführt wird.

8. Verfahren gemäß einem oder mehreren der vorhergehenden Ansprüche, um-fassend einen Filtrationsschritt der wässrigen Lösung von Titanoxiden zur Eli-minierung der Reste an Nanotubes, welche nicht in Lösung gebracht worden sind, wobei der Filtrationsschritt vorzugsweise mit Filtern mit einer Porosität von etwa 100 nmn durchgeführt. wird.

9. Verfahren gemäß einem der vorhergehenden Ansprüche, wobei der Schritt des Herstellens der Qantität an Titanoxidnanotubes durch Erwärmen von Titanoxiden und/oder Titansalzen auf Temperaturen im Bereich von etwa 50°C bis etwa 250°C in einer hochalkalischen Umgebung für eine Zeitdauer von nicht weniger als 2 Stunden erreicht wird.

10. Verfahren gemäß dem vorhergehenden Anspruch, wobei die Titanoxide und/oder Titansalze einem Erwärmen zusammen mit einem oder mehreren Al-kalihydraten, vorzugsweise ausgewählt aus der Gruppe, umfassend Natrium-hydroxid, Kaliumhydroxid und Lithiumhydroxid, unterworfen werden.

11. Verfahren gemäß einem der vorhergehenden Ansprüche, wobei vor dem Be-schallungsschritt verdünnte wässrige Lösungen von Salzen von Metallen, ausgewählt aus der Gruppe, umfassend Natrium, Kalium und/oder Lithium, vorzugsweise Natriumchlorid, zu dem wässrigen System, enthaltend die Nanotubes, mit einem pH von nicht weniger als 6 zugegeben werden, um derart das Lösen der Nanotubes in Wasser zu unterstützen.

12. Verfahren gemäß einem der vorhergehenden Ansprüche, wobei in dem Her-stellungsschritt Oxide oder Salze von Metallen, ausgewählt aus der Gruppe, umfassend Scandium, Yttrium, Vanadium und/oder Niob, mit den Titanoxiden oder Titansalzen gemischt werden, um so die Ionen der Metalle in das Kristall-gitter der Nanotubes zu insertieren.

13. Verfahren gemäß einem der vorhergehenden Ansprüche, umfassend einen Schritt des Behandelns der wässrigen Lösung von Single-Nanotubes mit Lö-sungen von Hydroxiden und Oxiden von den Metallen, ausgewählt aus der Gruppe, umfassend Lithium, Natrium, Kalium und/oder Calcium, um derart ei-nen Ionenaustausch mit mindestens einigen der Metallionen, die bereits in dem Kristallgitter der Nanotubes vorliegen, zu erzeugen.

14. Verfahren gemäß einem der vorhergehenden Ansprüche, umfassend einen Schritt des Legens von Nanoteilchen von Metallen, ausgewählt aus der Gruppe, umfassend Palladium, Platin, Silber, Gold und/oder Ruthenium, auf die Nanotubes der wässrigen Lösung, wobei der Schritt umfaßt:
- das Mischen der Lösung von Nanotubes mit wässrigen Lösungen, enthaltend Ionen der Metalle, und
- das Zugeben von Reduktionsmitteln, welche in der Lage sind, die Ionen in den Metallzustand zu reduzieren, zu dem Gemisch.

15. Verfahren gemäß dem vorhergehenden Anspruch, wobei vor dem Zugeben der Reduktionsmittel eine Inkubationszeit von mindestens zwei Stunden vorgesehen wird, um zuzulassen, daß die Nanotubes in Lösung die Ionen absorbieren.

16. Wässrige Lösung von Single-Titanoxidnanotubes, **dadurch gekennzeichnet, daß** sie eine Konzentration, berechnet als Titandioxid, von nicht weniger als 10 mg/l aufweist, stabil ist, wenn sie Zentrifugalfeldern von bis zu 3 10⁴ g für Zeitdauern von bis zu 30 Minuten unterworfen wird und über eine Zeitdauer in einem pH-Bereich von 4 bis 11 stabil ist.

17. Wässrige Lösung gemäß dem vorhergehenden Anspruch, wobei die wässrige Lösung ein UV-Vis Spektrum aufweist, welches in dem 200-300 nm Bereich ist, einen Doppelpeak mit einem primären Maximum bzw. sekundären Maximum um 245 bzw. 217 Nanometern zeigt und ein Verhältnis zwischen der Extinktion bei 245 und 300 Nanometern von gleich oder größer 5,5 zeigt.

## Revendications

1. Procédé de préparation de solutions aqueuses de nanotubes simples d'oxyde de titane, comprenant les étapes suivantes :
- la préparation d'une quantité prédéfinie de nanotubes d'oxyde de titane ;
- la soumission de ladite quantité prédéfinie de nanotubes d'oxyde de titane à un ou plusieurs rinçages avec de l'eau, jusqu'à ce que l'eau de rinçage, en équilibre chimique avec lesdits nanotubes présents dans ladite eau sous forme de phase solide, ait un pH entre 4 et 10 et une conductivité spécifique inférieure à 200 µS/cm ;
- la soumission de ladite phase solide à un traitement aux ultrasons dans l'eau dans le but d'obtenir une suspension aqueuse dans laquelle au moins une partie desdits nanotubes sont présents en solution sous la forme d'unités simples ; et
- la soumission de ladite suspension aqueuse traitée aux ultrasons à une centrifugation dans le but d'obtenir une solution aqueuse de nanotubes simples d'oxyde de titane ayant une concentration en dioxyde de titane pas inférieure à 10 mg/l.

2. Procédé selon la revendication 1, dans lequel ladite étape de traitement aux ultrasons est mise en oeuvre sur le système aqueux composé de ladite eau de rinçage et desdits nanotubes.

3. Procédé selon la revendication 1, dans lequel ladite étape de traitement aux ultrasons est mise en oeuvre sur le système aqueux composé de ladite phase solide séparée de ladite eau de rinçage et mélangée à de l'eau jusqu'à obtenir un rapport en poids entre l'eau et le dioxyde de titane inférieur à 10⁵.

4. Procédé selon l'une quelconque ou plusieurs des revendications précédentes, dans lequel lesdits rinçages sont mis en oeuvre en utilisant de l'eau pure.

5. Procédé selon l'une quelconque ou plusieurs des revendications 1 à 3, dans lequel au moins certains des dits rinçages sont mis en oeuvre en utilisant des solutions aqueuses acides.

6. Procédé selon l'une quelconque ou plusieurs des revendications précédentes, dans lequel ladite étape de traitement aux ultrasons est mise en oeuvre pendant au moins 2 minutes avec une puissance pas inférieure à 10 Watt et une fréquence pas inférieure à 30 kHz.

7. Procédé selon l'une quelconque ou plusieurs des revendications précédentes, dans lequel ladite étape de centrifugation est mise en oeuvre avec des accélérations situées dans la plage allant de 10³ g à 3 10⁴ g pendant des périodes maximales de temps d'environ 30 minutes.

8. Procédé selon l'une quelconque ou plusieurs des revendications précédentes, comprenant une étape de filtration de ladite solution aqueuse d'oxydes de titane destinée à éliminer les résidus de nanotubes qui ne sont pas passés en solution, ladite étape de filtration étant de préférence mise en oeuvre avec des filtres ayant une porosité d'approximativement 100 nm.

9. Procédé selon l'une quelconque des revendications précédentes, dans lequel ladite étape de préparation de ladite quantité de nanotubes d'oxyde de titane est mise en oeuvre en chauffant les oxydes de titane et/ou les sels de titane à des températures situées dans la plage allant d'environ 50 °C à environ 250 °C dans un environnement hautement alcalin pendant une période pas inférieure à 2 heures.

10. Procédé selon la revendication précédente, dans lequel lesdits oxydes de titane et/ou sels de titane sont soumis à un chauffage conjointement avec un ou plusieurs hydrates alcalins, choisis de préférence dans le groupe comprenant un hydrate de sodium, un hydrate de potassium ou un hydrate de lithium.

11. Procédé selon l'une quelconque des revendications précédentes, dans lequel, avant ladite étape de traitement aux ultrasons, des solutions aqueuses diluées de sels de métaux choisies dans le groupe comprenant sodium, potassium et/ou lithium, de préférence du chlorure de sodium, sont ajoutées dans ledit système aqueux contenant lesdits nanotubes, ayant un pH pas inférieur à 6, de sorte à favoriser la dissolution desdits nanotubes dans l'eau.

12. Procédé selon l'une quelconque des revendications précédentes, dans lequel, lors de ladite étape de préparation, des oxydes ou sels de métaux choisis dans le groupe comprenant le scandium, l'yttrium, le vanadium et/ou le niobium sont mélangés aux dits oxydes de titane ou sels de titane de sorte à insérer les ions desdits métaux à l'intérieur du réseau cristallin desdits nanotubes.

13. Procédé selon l'une quelconque des revendications précédentes, comprenant une étape de traitement de ladite solution aqueuse de nanotubes simples par des solutions d'hydrates et d'oxydes de métaux choisis dans le groupe comprenant le lithium, le sodium, le potassium et/ou le calcium, de sorte à générer un échange ionique avec au moins certains des ions métalliques déjà présents dans le réseau cristallin desdits nanotubes.

14. Procédé selon l'une quelconque des revendications précédentes, comprenant une étape de dépôt d'une couche de nanoparticules de métaux choisis dans le groupe comprenant le palladium, le platine, l'argent, l'or et/ou le ruthénium sur les nanotubes de ladite solution aqueuse, ladite étape comprenant :
- le mélange de ladite solution de nanotubes avec des solutions aqueuses contenant des ions des dits métaux ; et
- l'addition d'agents réducteurs dans ledit mélange capables de réduire lesdits ions à leur état métallique.

15. Procédé selon la revendication précédente, dans lequel, avant l'addition des dits agents réducteurs, une période d'incubation d'au moins 2 heures est prévue de sorte à permettre aux dits nanotubes présents en solution d'absorber lesdits ions.

16. Solution aqueuse de nanotubes simples d'oxyde de titane , **caractérisée en ce qu'**elle présente une concentration, calculée comme la concentration en dioxyde de titane, pas inférieure à 10 mg/l, **en ce qu'**elle est stable lorsqu'elle est soumise à des champs centrifuges allant jusqu'à 3 10⁴ g pendant des périodes de temps allant jusqu'à 30 minutes et **en ce qu'**elle est stable avec le temps dans une plage de pH allant de 4 à 11.

17. Solution aqueuse selon la revendication précédente, ladite solution aqueuse ayant un spectre UV-Vis présentant un double pic dans la plage allant de 200 à 300 nm ayant un maximum primaire et un maximum secondaire situés respectivement autour de 245 et de 217 nanomètres et un rapport entre les absorbances à 245 et à 300 nanomètres supérieur ou égal à 5,5.
